# EUROPEAN PATENT APPLICATION

(11) **EP 4 748 755 A1**
(43) Date of publication of application: **27.05.2026**
(21) Application number: 23946537.0
(22) Date of filing: 21.07.2023
(51) Int. Cl.: B65G 39/06, F16C 13/00, F16C 19/24

(54) **ROLLER SUITABLE FOR CONVEYOR BELTS**

(71) Applicant: ULMA Conveyor Components, S.Coop., 48210 Otxandio (ES)
(72) Inventor: AGUIRREGABIRIA BASAGUREN, Mikel, 48210 0txandio (ES); GARATE ARCINIEGA, Iñigo, 48210 0txandio (ES); ARRESE ZULOAGA, Joseba, 48140 Igorre (ES); JIMENEZ OCIO, Egoitz, 48003 Bilbao (ES)
(74) Representative: Galbaian S.Coop.
(86) International application number: PCT/ES2023/070478
(87) International publication number: WO 2025/022021

(57) **Abstract**

Roller (1) adapted to a conveyor belt comprising a hollow body (5), a shaft (2) housed at least partially in the hollow body (5), bearings (3) on which the shaft (2) is supported, and respective seats (4) for the corresponding bearing (3). the hollow body (5) is made of a plastic material and the roller (1) comprises bushings (7) that retain the hollow body (5) against the seats (4), preventing the hollow body (5) from opening radially due to deformation in the area in which it surrounds the seats (4).

## Description

### TECHNICAL FIELD

The object of the invention is a roller adapted for conveyor belts.

### PRIOR ART

Rollers are one of the main components of a conveyor belt. ES 1071611 U discloses a roller for conveyor belts comprising a steel tube, a shaft coaxial with the steel tube and bearings housed at the ends of the steel tube, housings at the ends of the tube for the corresponding bearing, and sealing means that protect the bearings from various contaminants such as dust, water, etc. to which the rollers may be subjected during operation.

EP 1103495 A1 discloses a friction roller comprising a fitted plastic body that rotates freely on a shaft. The plastic body has a reinforcement of non-slip elastic material (plastic or elastomer) inserted on the outside of the plastic body and protruding from the plastic body.

DE 10 2006 040 883 A1 discloses a roller configured to withstand high loads. The roller body is a solid body made of plastic. In addition, the roller may comprise an inner tube disposed inside the roller body, surrounding the roller shaft, and an outer tube surrounding the roller body externally. Both the inner and outer tubes may be made of a more rigid plastic material or a metallic material and are disposed bonded, pressed or extruded to the roller body.

Finally, EP 19019801 A1 describes rollers comprising a hollow metal tubular body with sections at its end to house bearings, and a shaft mounted on two bearings. The metal tubular body includes a reinforcement in the central section that prevents the tubular body from deforming when subjected to high stresses and/or speeds.

### DISCLOSURE OF THE INVENTION

The object of the invention is to provide a roller adapted to a conveyor belt, as defined in the claims.

The roller according to the invention comprises a hollow body, a shaft at least partially housed in the hollow body, bearings housed at the ends of the hollow body on which the shaft is supported, and a seat for each bearing fitted inside the hollow body.

When the roller is subjected to high loads, the hollow body, which is made of a plastic material, tends to deform radially or transversely at its ends, opening radially at those ends. When the ends open radially, not only are the bearings unprotected, but the bearings also do not function properly. This creates play in the bearing area, which must be avoided.

To avoid this problem, the roller according to the invention comprises bushings that retain the hollow body against the seats, preventing such radial/transverse deformation.

This results in a simple, optimised roller with a hollow plastic body that can be used in applications where the rollers are subjected to high loads without the problems mentioned above.

These and other advantages and features of the invention will become evident in view of the drawings and the detailed disclosure of the invention.

### DESCRIPTION OF THE DRAWINGS

Figure 1 shows a perspective view of an embodiment of a roller according to the invention.
Figure 2 shows a sectional view of the roller shown in Figure 1.
Figure 3 shows a front view of the section of the roller shown in Figure 2.
Figure 4 shows detail A of the roller shown in Figure 3.

### DETAILED DISCLOSURE OF THE INVENTION

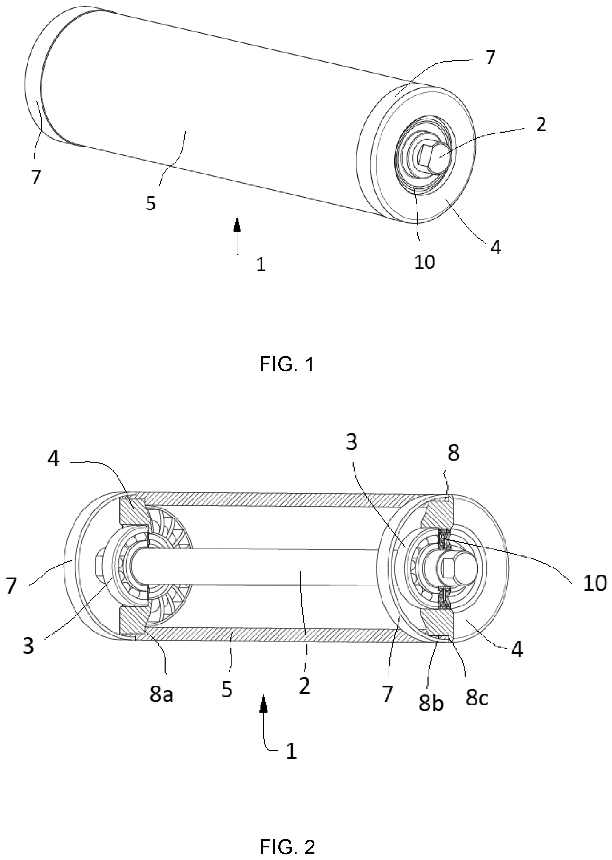

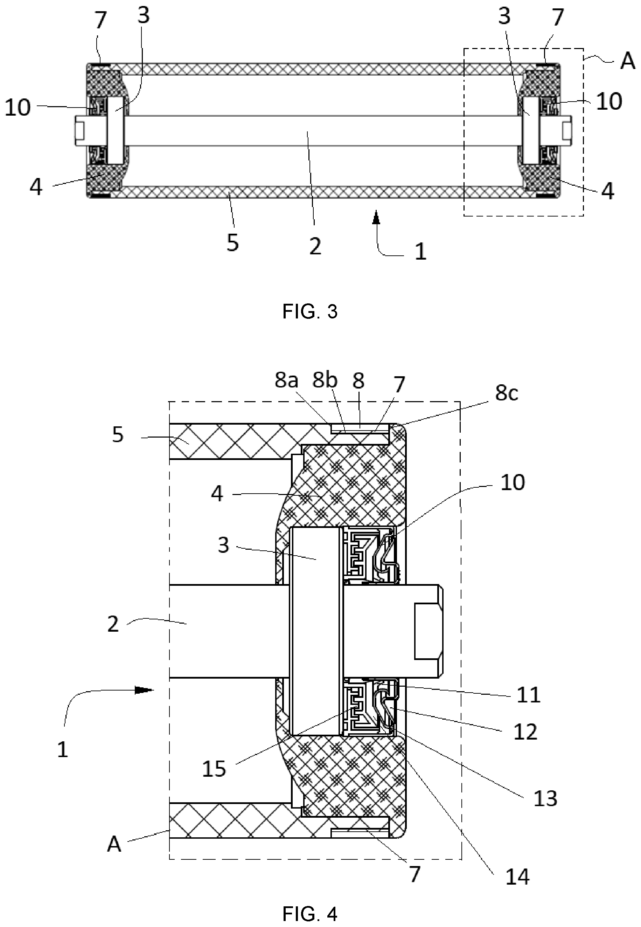

Figures 1 to 4 show an embodiment of a roller 1 according to the invention. The roller 1 is adapted for use in conveyor belts not shown.

Roller 1 comprises a tubular body or hollow body 5, a shaft 2 partially housed in the hollow body 5, bearings 3 on which the shaft 2 is supported, and a seat 4 for each bearing 3. The hollow body 5 is a cylindrical body. The shaft 2 passes through the hollow body 5, the hollow body 5 being rotatable with respect to the shaft 2 by means of the bearings 3, each of which is arranged at one end of the hollow body 5.

The seats 4 of the bearings 3 are independent elements of the hollow body 5 and are not integrated into said hollow body 5.

Roller 1 comprises bushings 7 that retain the hollow body 5 against the seats 4, preventing said hollow body 5, in particular the ends of said hollow body 5, from opening radially due to deformation in the area surrounding the seats 4 when roller 1 is subjected to high loads.

Each bushing 7 surrounds one end of the hollow body 5 on the outside. In particular, each bushing 7 surrounds at least partially the corresponding seat 4 and at least partially the corresponding bearing 3 on the outside.

Each bushing 7 has a maximum outer diameter equal to or less than the maximum outer diameter of the hollow body 5 and does not protrude radially with respect to the hollow body 5. The hollow body 5 comprises a housing 8 at each of its two ends, in which the corresponding bushing 7 is housed.

In the embodiment shown in the figures, each housing 8 is a recess in the corresponding end of the hollow body 5, the housing 8 being delimited by surfaces 8a and 8b of the hollow body 5 and a surface 8c of the seat 4. Bushings 7 have an outer diameter smaller than the outer diameter of the hollow body 5, being completely housed in the corresponding radial housing 8. Each bushing 7 is preferably fixed to the hollow body 5 by pressure.

The hollow body 5 is made of plastic material. Bushings 7, on the other hand, are made of a material that is more resistant to radial or transverse deformation than the plastic material of the hollow body 5.

Finally, the roller 1 also comprises sealing means 10 configured to protect the bearings 3 against contaminants to which they may be subjected, such as dust, water, etc. The sealing means 10 are known in the prior art and comprise a deflector 11 fitted to the shaft 2, a bushing 12 with a Z-shaped profile housed in the corresponding seat 4 and sealing against the seat 4 to prevent the entry of solid and liquid contaminants, a contact seal 13 concentric with the shaft 2, which seals against the deflector 11 allowing air to escape to the outside but not to enter the roller 1, a chamber 14 delimited by the deflector 11, the contact seal 13 and the bushing 12, filled with grease and configured to trap contaminating particles, and a labyrinth collar 15 housed in seat 4 configured to effectively expel solid and/or liquid contaminating particles, depositing them in chamber 14.

## Claims

1. Roller adapted to a conveyor belt, comprising a hollow body (5), a shaft (2) housed at least partially in the hollow body (5), bearings (3) on which the shaft (2) is supported, and a seat (4) for each bearing (3), **characterised in that** the hollow body (5) is made of a plastic material and the roller (1) comprises bushings (7) that retain the hollow body (5) against the seats (4), preventing the hollow body (5) from opening radially due to deformation in the area in which it surrounds the seats (4).

2. Roller according to the preceding claim, wherein each bushing (7) externally surrounds one end of the hollow body (5).

3. Roller according to any of the preceding claims, wherein each bushing (7) at least partially surrounds the seat (4) externally and at least partially surrounds the corresponding bearing (3).

4. Roller according to any of the preceding claims, wherein each bushing (7) has a maximum outer diameter equal to or less than the maximum outer diameter of the hollow body (5).

5. Roller according to any of the preceding claims, wherein the hollow body (5) comprises at each end a housing (8) in which the corresponding bushing (7) is housed.

6. Roller according to any of the preceding claims, wherein each bushing (7) is made of a material that is more resistant than the material of the hollow body (5) with respect to transverse or radial deformations.

7. Roller according to any of the preceding claims, wherein each bushing (7) is fixed to the hollow body (5) by pressure.

8. Roller according to any of the preceding claims, wherein the seats (4) are elements independent of the hollow body (5).

9. Conveyor belt comprising a plurality of rollers (1) according to any of the preceding claims.
